# EUROPÄISCHE PATENTSCHRIFT

(11) **EP 2 745 936 B1**
(45) Veröffentlichungstag und Bekanntmachung des Hinweises auf die Patenterteilung: **15.03.2017**
(21) Anmeldenummer: 12198835.6
(22) Anmeldetag: 21.12.2012
(51) Int. Cl.: G01N 1/28, B01L 3/00

(54) **Fluidiksystem mit saugfähigem Material und schaltbarem Polymergel**
Fluid system with Absorbent and reversible polymer gel
Système fluidique avec absorbent et gel de polymere reversible

(43) Veröffentlichungstag der Anmeldung: 25.06.2014
(73) Patentinhaber: Fraunhofer Gesellschaft zur Förderung der angewandten Forschung E.V., 80686 München (DE); Universität Potsdam, 14469 Potsdam (DE)
(72) Erfinder: Laschewesky, André, 14469 Potsdam (DE); Wischerhoff, Erik, 14469 Potsdam (DE); Beta, Carsten, 12163 Berlin (DE); Niedl, Robert, 14089 Berlin (DE)
(74) Vertreter: Junghans, Claas

(56) Entgegenhaltungen:
- EP-A1- 1 504 812
- WO-A1-2009/020435
- WO-A2-2006/122310
- DE-A1-102007 009 806
- JP-A- 2004 249 381
- JP-A- 2008 039 541
- US-A1- 2007 280 858

## Beschreibung

Die vorliegende Erfindung betrifft ein Fluidiksystem bzw. eine Fluidikvorrichtung sowie ein Verfahren für die definierte Freisetzung sowie den Transport und/oder die Mischung von Flüssigkeiten unter Verwendung dieses Fluidiksystems.

Die Lagerung und Handhabung von Flüssigkeiten ist in vielen technischen Systemen von großer Bedeutung. Insbesondere bei chemischen, biochemischen, biologischen oder medizinischen Nachweisverfahren liegen Proben oder Reagenzien häufig in flüssiger Form vor und müssen zu einem festgelegten Zeitpunkt oder auf ein konkretes Ereignis hin transportiert und / oder vermischt werden. Häufig müssen auch flüssige Komponenten vor dem Einsatz über längere Zeit im System gelagert werden.

Soll die Lagerung, die definierte Freisetzung, der Transport und die Mischung von flüssigen Komponenten in einem System integriert werden, erfordert dies nach dem Stand der Technik mindestens das Vorhandensein von Reservoiren, Ventilen mit unter Umständen komplizierten Schaltelementen, Kanälen und Mischvorrichtungen. Solche Elemente sind z.B. aus J.C. Kurnia et al., J. Funct. Biomater., 2, 195-212 (2011) oder L. Dong et al., Soft Matter, 3, 1223-1230 (2007) bekannt und werden auch angewendet. Ihre Integration in einem System stellt aber einen erheblichen Aufwand dar. Vergleichsweise simple und kostengünstige Fluidiksysteme sind zwar z. B. aus E. Carrilho et al., Anal. Chem. 81, 7091-7095 (2009) bekannt, aber solche Gegenstände bieten nicht die Funktionsvielfalt, die für eine komplexere Flüssigkeits- und Probenhandhabung erforderlich ist.

Daher besteht nach wie vor ein Bedarf an Fluidiksystemen bzw. Fluidikvorrichtungen, die sowohl die Integration der Funktionen von Reservoiren, Ventilen mit vielfältig einsetzbaren Schaltelementen, Kanälen und Mischvorrichtungen ermöglichen als auch leicht herstellbar und somit auch kostengünstig sind. Ferner sollen diese Fluidiksysteme vielfältig einsetzbar sein.

Gemäß einem ersten Aspekt betrifft die vorliegende Erfindung ein Fluidiksystem bzw. eine Fluidikvorrichtung, umfassend
- mindestens einen Kanal für den Transport einer Flüssigkeit, wobei der Kanal aus einem saugfähigen Material gebildet ist, und
- zumindest ein schaltbares Polymergel, das als Speicherreservoir und/oder Ventil für die Flüssigkeit fungiert und in Kontakt mit dem saugfähigen Material des Kanals steht.

Im Rahmen der vorliegenden Erfindung wird der für den Flüssigkeitstransport verwendete Kanal nicht in herkömmlicher Weise durch einen Kanal mit Wandung und einem von dieser Wandung umschlossenen Hohlraum, sondern durch ein saugfähiges Material gebildet, das den Flüssigkeitstransport über Kapillarkräfte bewirkt.

Weiterhin enthält das Fluidiksystem ein schaltbares Polymergel, das in Abhängigkeit von äußeren Parametern Flüssigkeit aufnehmen (und dabei quellen), diese Flüssigkeit anschließend halten oder auch wieder abgeben kann. Solche Vorgänge sind reversibel. Da das saugfähige Material des Kanals mit dem schaltbaren Polymergel in Kontakt steht (d.h. eine Berührungsfläche bzw. gemeinsame Grenzfläche zwischen diesen beiden Komponenten vorliegt), ist beispielsweise durch Einwirken eines geeigneten externen Stimulus ein Flüssigkeitstransfer vom Polymergel zu dem Kanal möglich.

Die Kontaktfläche zwischen dem schaltbaren Polymergel und dem saugfähigen Material des Kanals kann auf unterschiedliche Weise realisiert werden.

Beispielsweise kann das Polymergel auf der Oberseite des Kanals aufliegen. Sofern notwendig, kann das Polymergel durch geeignete Fixierungselemente in dem Fluidiksystem fixiert werden, beispielsweise durch eine Klebefolie und/oder ein äußeres Gehäuse.

Weiterhin ist es möglich, dass das schaltbare Polymergel durch Einbetten oder Eingießen fest mit dem saugfähigen Material verbunden ist. Dabei kann das Polymergel sowohl als Speicherreservoir wie auch als Ventil fungieren.

Das saugfähige Material kann zumindest abschnittsweise in das Polymergel eingebettet sein.

Auch ist es im Rahmen der vorliegenden Erfindung möglich, dass das schaltbare Polymergel zwischen zwei Ebenen saugfähiger Materialien, z.B. zwischen zwei Papierebenen, vorliegt. Dabei kann das Polymergel als Ventil fungieren. Das Polymergel kann eingebettet oder aufgelegt sein.

Im Rahmen der vorliegenden Erfindung ist das Fluidiksystem bevorzugt so ausgestaltet, dass das Polymergel keinen Bereich aufweist, der vollumfänglich von dem Kanal bzw. dem saugfähigen Material, das den Kanal bildet, umschlossen ist. Es ist also bevorzugt, dass das saugfähige Material nicht in der Form eines Rohres vorliegt, das das Polymergel umschließt.

Im Rahmen der vorliegenden Erfindung wird die Ventilfunktion durch den phasenübergangsbedingten Kollaps im Gel bei Einwirken des Stimulus erreicht und nicht durch rein geometrische Freigabe/Blockierung eines Kanals (wie es z.B. der Fall wäre, wenn ein Polymergel innerhalb eines rohrförmigen Kanals positioniert ist.

Das erfindungsgemäße Fluidiksystem ermöglicht die Integration der Funktionen von Reservoiren, Ventilen mit vielfältig einsetzbaren Schaltelementen, Kanälen und Mischvorrichtungen mit einfachsten Mitteln und ist dementsprechend kostengünstig. Insbesondere weist das Fluidiksystem keine Ventile mit unter Umständen komplizierten Schaltelementen auf. Des Weiteren kann das Fluidiksystem mit unterschiedlichen Stimuli zur Schaltung der Reservoire verwendet werden, so dass eine große Funktionsvielfalt gegeben ist. Darüber hinaus ermöglicht das Fluidiksystem die exakte Dosierung von geringen Stoffinengen zu einem gewünschten Zeitpunkt auf kleinstem Raum.

Geeignete saugfähige Materialien, die aufgrund von Kapillarkräften einen Flüssigkeitstransport bewirken können, sind dem Fachmann grundsätzlich bekannt. Beispielhaft können in diesem Zusammenhang Cellulose-haltige Materialien genannt werden.

In einer bevorzugten Ausführungsform handelt es sich bei dem saugfähigen Material des Kanals um Papier oder Nitrocellulose oder Kombinationen oder Gemische dieser Materialien.

Im Rahmen der vorliegenden Erfindung ist es möglich, dass nur ein schaltbares Polymergel in Kontakt mit dem saugfähigen Material des Kanals steht (d.h. ein schaltbares Polymergel pro Kanal). Alternativ ist es auch möglich, dass zwei oder mehr schaltbare Polymergele in Kontakt mit dem saugfähigen Material des Kanals stehen (d.h. zwei oder mehr schaltbare Polymergele pro Kanal), wobei in diesem Fall die Polymergele natürlich an unterschiedlichen Positionen des Kanals angebracht sind, beispielsweise an den jeweiligen Enden des Kanals.

Weiterhin ist es auch möglich, dass das schaltbare Polymergel mit den saugfähigen Materialien von mindestens zwei verschiedenen Kanälen in Kontakt steht, d.h. zwei oder mehr Kanäle miteinander verbindet und so einen Flüssigkeitstransfer zwischen diesen Kanälen ermöglicht.

Im Rahmen der vorliegenden Erfindung können eine Vielzahl unterschiedlicher Kanalstrukturen realisiert werden. Im einfachsten Fall verläuft der Kanal geradlinig und weist keine Verzweigungen auf. Der Kanal kann jedoch auch mindestens eine Verzweigung aufweisen, beispielsweise eine oder mehrere T-förmige und/oder Y-förmige und/oder X-förmige Verzweigungen.

Diese Verzweigungspunkte können bei der Anwendung des Fluidiksystems auch als Mischbereiche bzw. Mischzonen fungieren, in denen Flüssigkeiten, die aus unterschiedlichen Polymergelen freigesetzt wurden, aufeinander treffen und sich mischen.

Das den Kanal bildende saugfähige Material sollte nicht zu dick sein, so dass eine möglichste schnelle Diffusion der Flüssigkeit in der Ebenenrichtung stattfindet. Geeigneterweise beträgt die Dicke des saugfähigen Materials höchstens 1 mm, bevorzugter höchstens 200 µm.

Je nach Verwendungszweck des Fluidiksystems kann die Breite des Kanals über einen weiten Bereich variiert werden. Als geeignete Breite des Kanals kann beispielsweise ein Bereich von ca. 10µm bis 10mm genannt werden.

Im Rahmen der vorliegenden Erfindung kann das Fluidiksystem auch so dimensioniert sein, dass es sich um ein Mikrofluidiksystem handelt. Unter einem "Mikrofluidiksystem" versteht der Fachmann üblicherweise ein miniaturisiertes System, das zur Speicherung, Abgabe und/oder Prozessierung kleiner Flüssigkeitsmengen geeignet ist, beispielsweise von Flüssigkeitsmengen von insgesamt weniger als 1000 µl oder sogar weniger als 10 µl.

Das Fluidiksystem kann ein Papiersubstrat enthalten, das einen oder mehrere saugfähige Bereiche und einen oder mehrere nicht-saugfähige Bereiche aufweist und wobei der Kanal oder die Kanäle durch den oder die saugfähigen Bereiche gebildet sind.

Die Herstellung eines solchen strukturierten Papiersubstrats kann über gebräuchliche, dem Fachmann bekannte Verfahren erfolgen wie z.B. eine photolithographische Mikrostrukturierung oder das definierte Aufbringen von Wachs (z.B. über eine Druckvorrichtung bzw. einen Drucker), wodurch hydrophobe und daher nicht mehr saugfähige Bereiche entstehen. Das Prinzip ist z. B. in A.W. Martinez et al., Lab Chip (2008) 8, 2146 erläutert.

Das Fluidiksystem kann ein Heiz- und/oder Kühlelement aufweisen, welche(s) in thermischem Kontakt mit dem Kanal und/oder dem schaltbaren Polymergel stehen bzw. steht. Damit lässt sich die Freisetzung der Flüssigkeit aus dem schaltbaren Polymergel gezielter steuern.

Das Fluidiksystem der vorliegenden Erfindung weist ein schaltbares Polymergel auf, das als Speicherreservoir und/oder Ventil für die Flüssigkeit fungiert und in Kontakt mit dem saugfähigen Material des Kanals steht.

Unter einem Polymergel versteht man ein dreidimensionales Netzwerk, das in einem Lösungsmittel nicht mehr löslich ist, sondern dieses aufnimmt und damit quillt. Handelt es sich bei dem Quellungsmittel um Wasser, spricht man von Hydrogelen. Die Vernetzung der Polymere kann physikalisch oder chemisch erfolgen. Bei einem physikalisch vernetzten Gel werden die Netzknoten durch Verschlaufungen und Verhakungen von langen Polymerketten untereinander gebildet. Auch können Netzknoten über physikalische Wechselwirkungen, wie z. B. elektrostatische Wechselwirkungen gebildet werden. Bei chemisch vernetzten Gelen werden die Knotenpunkte durch kovalente Bindungen zwischen den Polymerketten gebildet.

Unter schaltbaren Polymergelen versteht der Fachmann solche Polymergele, die unter Einwirkung eines externen Stimulus (d.h. unter der Einwirkung eines äußeren, sich ändernden Parameters) unter Flüssigkeitsaufnahme quellen oder alternativ auch unter Flüssigkeitsabgabe kollabieren können. Diese Übergänge sind bevorzugt reversibel.

Solche Polymergele sind dem Fachmann grundsätzlich bekannt.

Für das schaltbare Polymergel, insbesondere das schaltbare Hydrogel, sind in erster Linie solche Materialien geeignet, die einen Volumenphasenübergang aufweisen. Dieser kann auf einer unteren und/oder einer oberen kritischen Lösungstemperatur basieren. In einem derartigen System dient die Temperatur als Schalter. Die Freisetzung der Flüssigkeit erfolgt bei Unter- oder Überschreitung einer Schwellentemperatur. Solche Systeme können durch den Einbau zusätzlicher Gruppen modifiziert werden, die ihre Hydrophilie bei Einwirken eines anderen Stimulus als der Temperatur ändern. Durch Reaktion auf diesen anderen Stimulus können, in einem bestimmten Temperaturintervall, vielfältige andere Schaltphänomene realisiert werden. Derartige Systeme sind beispielsweise in M. Irie, Adv. Polym. Sci. 110, 43-65 (1993) beschrieben. So können z. B. pH-Wert, Ionenstärke, Licht oder chemische Reaktionen als Schalter dienen. Bei geeigneter Auslegung des Systems können auch komplexe Biomakromoleküle wie Proteine als Stimulus fungieren. Derartige Systeme werden beispielsweise in J. Buller et al., Polym. Chem. 2, 1486-1489 (2011) beschrieben.

Beispiele für Gruppen, die Schaltbarkeit mit Licht hervorrufen sind Azobenzole (R. Kröger et al., Macromol. Chem. Phys. (1994) 195, 2291-2298; H. Akiyama et al., Macromolecules (2007) 40, 5129-5132), Spiropyrane (Edahiro et al., Biomacromolecules (2005) 6, 970-974) oder Derivate des Farbstoffs Malachitgrün. Beispiele für Gruppen, die Schaltbarkeit über den pH-Wert hervorrufen, sind Amino- oder Carboxylgruppen. Ein Beispiel für Schaltbarkeit über eine chemische Reaktion ist in P. Mi et al., Macromol. Rapid Commun. (2008) 29, 27-32 beschrieben.

In bevorzugten Ausführungsformen handelt es sich bei den Polymergelen um solche, die durch einen externen Stimulus (d.h. durch Änderung eines externen Parameters), welcher ausgewählt wird aus Temperatur, pH-Wert, Ionenstärke, Ionenart, elektromagnetische Strahlung (insbesondere Licht), einer chemischen Reaktion, die Anwesenheit (Zugabe oder Austausch) von chemischen (insbesondere niedermolekularen) oder biochemischen Reagenzien oder einer Einwirkung durch Biomoleküle wie Proteine, oder Kombinationen davon, schaltbar sind.

Bevorzugt handelt es sich bei dem schaltbaren Polymergel um ein schaltbares Hydrogel, d.h. ein durch Wasser quellbares Polymergel. Alternativ oder in Kombination mit einem Hydrogel können im Rahmen der vorliegenden Erfindung auch Polymergele verwendet werden, die mit einer organischen Flüssigkeit quellbar sind. Beispiele für Polymere, die als Grundstruktur für Gele mit einer unteren kritischen Lösungstemperatur in organischen Flüssigkeiten dienen können, sind in Z. Liu et al., Polymer Journal (2010) 42, 901-904 und K.-I. Zeno et al., J. Polym. Sci. A (2008), 46(17), 5724-5733 beschrieben.

Bei dem schaltbaren Hydrogel kann es sich um ein temperatursensitives Hydrogel mit einer oberen kritischen Lösungstemperatur handeln. Beispiele für Polymere, die als Grundstruktur für Hydrogele mit einer oberen kritischen Lösungstemperatur dienen können, finden sich in J. Seuring et al., Macromolecules (2012), 45, 3910-3918.

Bei dem schaltbaren Hydrogel kann es sich auch um ein temperatursensitives Hydrogel mit einer unteren kritischen Lösungstemperatur handeln.
Beispiele für Polymere, die als Grundstruktur für Hydrogele mit einer unteren kritischen Lösungstemperatur dienen können, sind in der folgenden Liste aufgeführt: 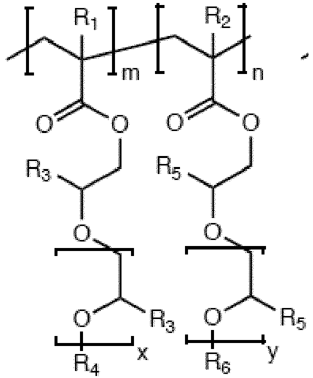 wobei
R₁, R₂ = H, Alkyl wie z.B. C₁₋₄-Alkyl
R₃, R₅ = H, Alkyl wie z.B. C₁₋₄-Alkyl,
R₄, R₆ = H, Alkyl wie z.B. C₁₋₄-Alkyl, Allyl, Phenyl, Benzyl, Acyl,
x und y unabhängig voneinander 1-50, bevorzugter 2-20 sind,
4≤ m + n ≤ 10⁷; 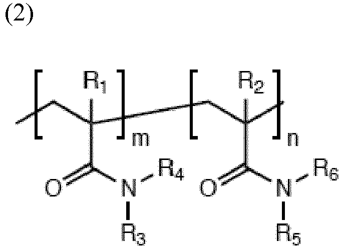
wobei
R₁, R₂ = H, Alkyl wie z.B. C₁₋₄-Alkyl,
R₃, R₄, R₅, R₆ = H, Alkyl wie z.B. C₁₋₄-Alkyl, Allyl, Phenyl, Benzyl,
4≤ m + n ≤ 10⁷; 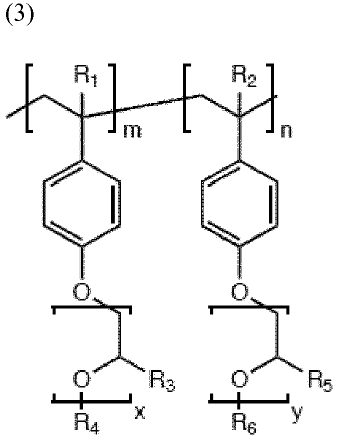
wobei
R₁, R₂ = H, Alkyl wie z.B. C₁₋₄-Alkyl
R₃, R₅ = H, Alkyl wie z.B. C₁₋₄-Alkyl,
R₄, R₆ = H, Alkyl wie z.B. C₁₋₄-Alkyl, Allyl, Phenyl, Benzyl, Acyl,
x und y unabhängig voneinander 1-50, bevorzugter 2-20 sind,
4≤ m + n ≤ 10⁷; 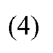 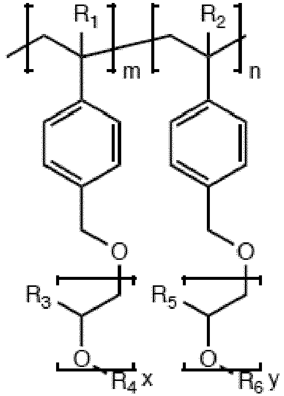
wobei
R₁, R₂ = H, Alkyl wie z.B. C₁₋₄-Alkyl
R₃, R₅ = H, Alkyl wie z.B. C₁₋₄-Alkyl,
R₄, R₆ = H, Alkyl wie z.B. C₁₋₄-Alkyl, Allyl, Phenyl, Benzyl, Acyl,
x und y unabhängig voneinander 1-50, bevorzugter 2-20 sind,
4≤ m + n ≤ 10⁷; 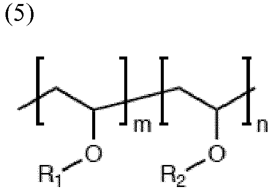
wobei
R₁, R₂ = H, Alkyl wie z.B. C₁₋₄-Alkyl
4≤ m + n ≤ 10⁷; 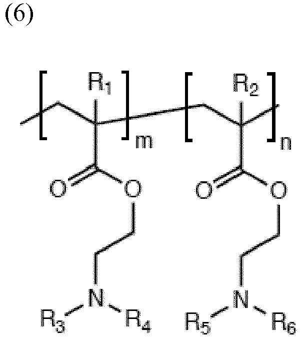
wobei
R₁, R₂ = H, Alkyl wie z.B. C₁₋₄-Alkyl
R₃, R₅ = H, Alkyl wie z.B. C₁₋₄-Alkyl,
R₄, R₆ = H, Alkyl wie z.B. C₁₋₄-Alkyl, Allyl, Phenyl, Benzyl, Acyl,
4≤ m + n ≤ 10⁷; 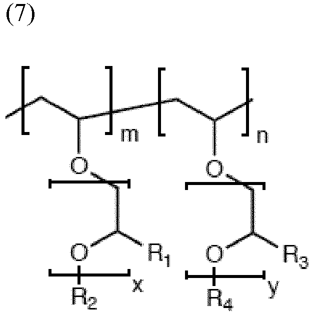
wobei
R₁, R3 = H, Alkyl wie z.B. C₁₋₄-Alkyl
R2, R4 = H, Alkyl wie z.B. C₁₋₄-Alkyl, Allyl, Phenyl, Benzyl, Acyl,
x und y unabhängig voneinander 1-50, bevorzugter 2-20 sind,
4≤ m + n ≤ 10⁷;

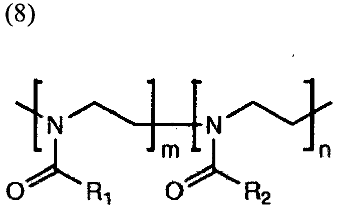

R₁, R₂ = H, Alkyl wie z.B. C₁₋₄-Alkyl, Allyl, Phenyl, Benzyl
4≤ m + n ≤ 10⁷; 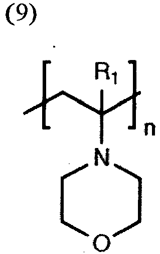
R₁, = H, Alkyl wie z.B. C₁₋₄-Alkyl, n > 5 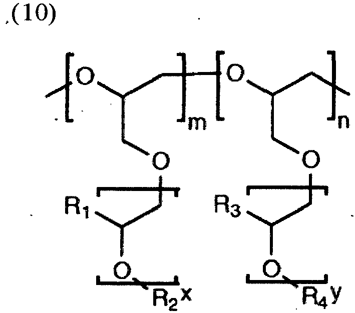
R₁, R₃ = H, Alkyl wie z.B. C₁₋₄-Alkyl,
R₂, R₄ = H, Alkyl wie z.B. C₁₋₄-Alkyl, Allyl, Phenyl, Benzyl, Acyl
x und y unabhängig voneinander 1-50, bevorzugter 2-20 sind,
4≤ m + n ≤ 10⁷;

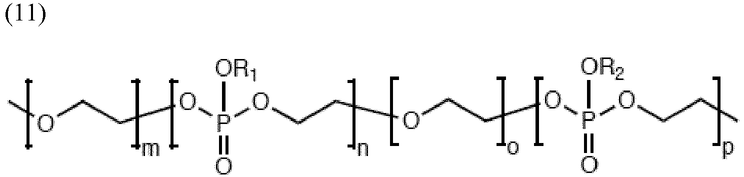

R₁, R₂ = H, Alkyl wie z.B. C₁₋₄-Alkyl,
4≤ m + n + o + p ≤ 10⁷;

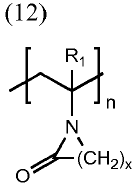

R₁ = H, Alkyl wie z.B. C₁₋₄-Alkyl,
x für den heterocyclischen Ring 2 bis 6 ist,
n für die Anzahl der Monomereinheiten in der Polymerkette größer 5 ist, z.B. 6 ≤ n ≤ 10⁷

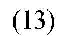

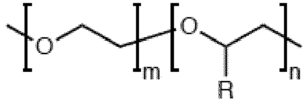

R = Alkyl, bevorzugt Methyl,
10 > m : n > 0,1;
4≤ m + n ≤ 10⁷; 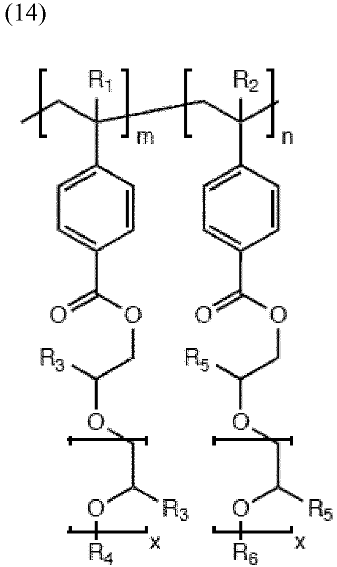
wobei
R₁, R₂ = H, Alkyl wie z.B. C₁₋₄-Alkyl
R₃, R₅ = H, Alkyl wie z.B. C₁₋₄-Alkyl,
R₄, R₆ = H, Alkyl wie z.B. C₁₋₄-Alkyl, Allyl, Phenyl, Benzyl, Acyl,
x und y unabhängig voneinander 1-50, bevorzugter 2-20 sind,
4≤ m + n ≤ 10⁷;

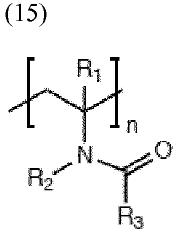

R₁, R₂ = H, Alkyl wie z.B. C₁₋₄-Alkyl, R₃ = Alkyl wie z.B. C₁₋₄-Alkyl, Allyl, Phenyl, Benzyl,
4≤ n ≤ 10⁷; 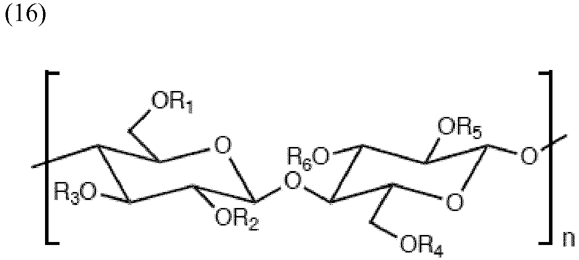
R₁, R₂, R₃, R₄, R₅, R₆ = H, Alkyl wie z.B. C₁₋₄-Alkyl, Allyl, Phenyl, Benzyl, Acyl, 4≤ n ≤ 10⁷.

Beispiele für Vernetzer sind di- oder multifunktionale Acryl-, Methacryl-, Vinyl- oder Allyl-Monomere. Eine chemische Vernetzung ist aber auch über photochemische Reaktionen möglich, wenn man von einem löslichen Vorläuferpolymer ausgeht, welches z. B. Diazirin-, Acetophenon- oder Benzophenoneinheiten trägt. Weiterhin ist auch möglich, funktionale Gruppen in ein Vorläuferpolymer einzubauen, welche dann mit komplementären funktionalen Gruppen an di- oder multifunktionalen Vernetzermolekülen kovalente Bindungen ausbilden. Beispiele für geeignete komplementäre Gruppen finden sich in E. Wischerhoff et al., Adv. Polym. Sci. (2011) 240: 1-33.

Im Rahmen der vorliegenden Erfindung kann es bevorzugt sein, dass die in dem schaltbaren Polymergel im gequollenen Zustand vorliegende Flüssigkeit eine darin gelöste oder dispergierte Komponente aufweist, welche aus einem chemischen oder biochemischen Reagenz, einem biologischen Wirkstoff, einem pharmazeutischen Wirkstoff, einem Allergen, einem Antigen, einem Antikörper, einem Enzym, einem Protein und Gemischen von diesen ausgewählt wird. Die Anwesenheit einer derartigen zusätzlichen Komponente ermöglicht z.B. gezielte analytische Nachweisreaktionen. Bevorzugt handelt es sich bei dieser zusätzlichen Komponente um einen Bestandteil bzw. Bestandteile eines chemischen, biologischen oder medizinischen Assay. Dabei ist es möglich, dass mehrere dieser Zusatzkomponenten auf unterschiedliche schaltbare Polymergele in dem Fluidiksystem verteilt sind und erst dann miteinander in Kontakt kommen, wenn die Flüssigkeiten unter Einwirkung eines externen Stimulus freigesetzt werden und an bestimmten Stellen des Kanals (beispielsweise an Verzweigungspunkten des Kanals) aufeinander treffen.

Der Kanal des erfindungsgemäßen Fluidiksystems kann auch mindestens einen nicht-schaltbaren Bereich aufweisen, an dem sich eine Komponente, welche aus einem chemischen oder biochemischen Reagenz, einem biologischen Wirkstoff, einem pharmazeutischen Wirkstoff, einem Allergen, einem Antigen, einem Antikörper, einem Enzym, einem Protein und Gemischen von diesen ausgewählt wird, befindet. Wenn durch das schaltbare Polymergel eine Flüssigkeit freigesetzt wird, die eine der oben genannten zusätzlichen Komponenten oder gegebenenfalls eine analytisch nachzuweisende Verbindung enthält, und diese Flüssigkeit über den Kanal bis zu dem nicht-schaltbaren Bereich wandert, kann es dort zu einer entsprechenden analytischen Nachweisreaktion kommen.

Gemäß einem weiteren Aspekt betrifft die vorliegende Erfindung ein Verfahren zur Freisetzung und zum Transport und gegebenenfalls zum Mischen von Flüssigkeiten, umfassend:
- die Bereitstellung des oben beschriebenen erfindungsgemäßen Fluidiksystems, wobei zumindest eines der schaltbaren Polymergele mit einer Flüssigkeit gequollen ist,
- die Änderung eines externen Parameters, so dass zumindest eines der gequollenen Polymergele seine Flüssigkeit freisetzt.

Das Überführen des Polymergels in seinen gequollenen Zustand erfolgt in üblicher, dem Fachmann bekannter Weise. Dazu wird das trockene Polymergel mit einer ausreichenden Menge der Flüssigkeit solange in Kontakt gebracht, bis das Polymergel schließlich im gequollenen Zustand vorliegt. Während der Überführung in den gequollenen Zustand kann das Polymergel bereits auf dem Substrat vorliegen. Alternativ kann das Polymergel zunächst an einem externen Ort in den gequollenen Zustand überführt und erst anschließend auf dem Substrat angebracht werden.

Wie bereits oben erläutert, erfolgt die Freisetzung der Flüssigkeit (d.h. das Schalten des Polymergels) bevorzugt durch eine Änderung von Temperatur, pH-Wert, Ionenstärke, Ionenart, elektromagnetischer Strahlung (insbesondere Licht), durch eine chemische Reaktion, durch die Anwesenheit (Zugabe oder Austausch) von chemischen (insbesondere niedermolekularen) oder biochemischen Reagenzien oder eine Einwirkung durch Biomoleküle wie Proteine, oder durch Kombinationen davon.

Das erfindungsgemäße Verfahren weist eine hohe Flexibilität auf. So kann beispielsweise das Fluidiksystem zwei oder mehr gequollene schaltbare Polymergele aufweisen und die Änderung des externen Parameters in Abhängigkeit von der Zeit erfolgt so, dass alle gequollenen Polymergele ihre Flüssigkeit gleichzeitig freisetzen. Alternativ kann die Änderung des externen Parameters in Abhängigkeit von der Zeit so erfolgen, dass die gequollenen Polymergele ihre Flüssigkeit zeitlich versetzt zueinander abgeben.

Die Freisetzung der Flüssigkeit kann auch durch das zusätzliche Anbringen bzw. die Einwirkung eines Heiz- oder Kühlelements beeinflusst werden. Durch ein solches Heiz- oder Kühlelement können unterschiedliche Abschnitte eines Kanals oder unterschiedliche Kanäle und/oder unterschiedliche Polymergele auf eine unterschiedliche Temperatur gebracht werden, wodurch die Freisetzung der Flüssigkeit aus den gequollenen schaltbaren Polymergelen gezielt beeinflussbar ist.

Beispielsweise können die Temperaturen so gewählt werden, dass eines der schaltbaren gequollenen Polymergele seine Flüssigkeit freisetzt, während ein weiteres gequollenes Polymergel seine Flüssigkeit noch behält.

In einer bevorzugten Ausführungsform weist das Fluidiksystem zwei oder mehr gequollene schaltbare Polymergele auf und die Flüssigkeiten treffen nach ihrer Freisetzung in das saugfähige Material des Kanals in einem Mischbereich aufeinander und werden vermischt.

Der Mischbereich kann beispielsweise an einem Verzweigungspunkt des Kanals liegen.

Das Fluidiksystem der vorliegenden Erfindung eignet sich zur Verwendung bei der Durchführung eines chemischen, biologischen oder medizinischen Assay.

Der chemische, biologische oder medizinische Assay kann beispielsweise durchgeführt werden, indem die Flüssigkeit des gequollenen Polymergels eine gelöste oder dispergierte Komponente aufweist, welche aus einem chemischen oder biochemischen Reagenz, einem biologischen Wirkstoff, einem pharmazeutischen Wirkstoff, einem Allergen, einem Antigen, einem Antikörper, einem Enzym, einem Protein und Gemischen von diesen ausgewählt wird; eine zu analysierende Probe in das Fluidiksystem eingebracht wird; und die Flüssigkeit nach ihrer Freisetzung in das saugfähige Material des Kanals zu der Probe wandert.

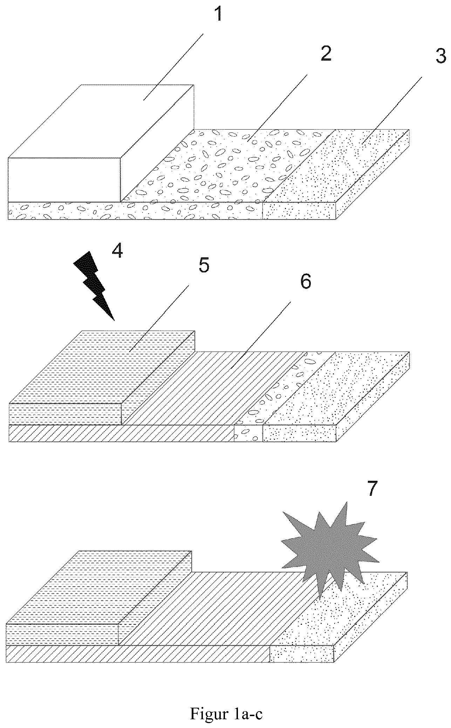

Eine beispielhafte Ausführungsform wird in Figur 1a-c beschrieben.

Ein mit Flüssigkeit gequollener Hydrogelblock aus einem schaltbaren Polymergel (1) wird mit einem saugfähigen Papierstreifen (2) in Kontakt gebracht, so dass ein Übertritt der im Hydrogel gespeicherten Flüssigkeit erfolgen kann. Am anderen Ende ist der Papierstreifen mit einem Reagenz getränkt (3), das z. B. mit der Flüssigkeit aus dem Hydrogel eine Farbreaktion auslösen kann. Im hydrophilen Zustand hält das Hydrogel die Flüssigkeit; ein Übertritt in das Papier erfolgt noch nicht. Wird das Hydrogel nun einem externen Stimulus (4) ausgesetzt, so schaltet es in einen hydrophoben Zustand (5), es kollabiert und die Flüssigkeit wird freigesetzt. Durch den unmittelbaren Kontakt wird sie nun in das Papier gesogen (6) und über Kapillarkräfte gelangt sie zum Wirkort, hier der reagenzgetränkte Teil des Papierstreifens. Am Wirkort trifft die Flüssigkeit auf das Reagenz und löst dort eine optisch erkennbare Nachweisreaktion (7) aus.

### Ausführungsbeispiele

### A. Stimuligesteuerte Befüllung eines Kanals in einem Substrat

Die stimuligesteuerte Befüllung eines Kanals wurde in einem Papiersubstrat durchgeführt. Dazu wurden auf einem Papiersubstrat durch photolithographische Mikrostrukturierung vier parallele Kanäle eingeprägt. Die eingeprägten parallelen Kanäle stehen jeweils mit einem Poly(N-isopropylacrylamid)-Hydrogel [Poly(NIPAM)-Hydrogel] in Kontakt Die Hydrogele wurden mit den kreisförmigen Endbereichen auf der rechten Seite des Papiersubstrats in Kontakt gebracht und fixiert. In die Hydrogele wurde schwarze Tinte eingelagert und bei verschiedenen Temperaturen freigesetzt (Temperatur der Heizplatte links 30,2 °C, rechts 37,2 °C). In beiden Experimenten wurde die Temperatur zwischen den Kanälen außerdem dadurch variiert, dass der obere Kanal direkt mit der Heizplatte in Kontakt stand, während sich zwischen den unteren Kanälen und der Heizplatte zusätzlich mindestens eine isolierende Papierschicht befand. Die graduellen Temperaturunterschiede zwischen den einzelnen Kanälen (mit steigender Anzahl der isolierenden Papierschichten) führten zu klaren Unterschieden in den freigesetzten Flüssigkeitsmengen in dem jeweiligen Kanal.

### B. Stimuligesteuertes Mischen von Substanzen in einem Substrat

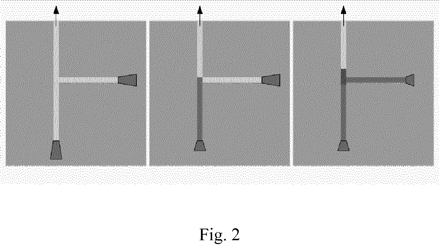

Das stimuligesteuerte Mischen von Substanzen wurde in einem Papiersubstrat durchgeführt. Das stimuligesteuerte Mischen von Substanzen kann durch nacheinander geschalteten Hydrogelkollaps oder gleichzeitig geschalteten Hydrogelkollaps erfolgen. Dazu wurde auf einem Papiersubstrat durch photolithographische Mikrostrukturierung ein T-förmiger Kanal eingeprägt. Figur 2 zeigt ein solches Papiersubstrat. Die Endbereiche des eingeprägten T-förmigen Kanals stehen jeweils mit einem Poly(NIPAM)-Hydrogel in Kontakt. Durch Kombination verschiedener Hydrogeldepots in dem mikrofluidischen Substrat können unterschiedliche Substanzen zeitlich versetzt durch Kollaps der entsprechenden Hydrogelreservoire freigesetzt und in das mikrofluidische System injiziert werden. An der T-förmigen Verbindungsstelle findet eine Vermischung der injizierten Substanzen statt. Je nach Struktur des Kanalnetzwerkes können die Substanzen an unterschiedlichen Orten auf dem Substrat miteinander in Kontakt gebracht werden, um gezielt Mischungs- und Reaktionsprozesse auszulösen.

### C. Stimuligesteuerter enzymatischer Assay

Der stimuligesteuerte enzymatische Assay am Beispiel einer Nachweisreaktion für Glukose wurde in einem Papiersubstrat durchgeführt. Dazu wurde auf einem Papiersubstrat durch photolithographische Mikrostrukturierung ein Mischbereich eingeprägt, der mit entsprechend eingeprägten Kanälen in Kontakt steht. Die eingeprägten Kanäle sind wiederum mit jeweils einem eingeprägten Reservoirbereich verbunden, der mit jeweils einem Poly(NIPAM)-Hydrogel in Kontakt steht.

In einem ersten Hydrogel wurde Meerrettichperoxidase (HRP) eingelagert, in einem zweiten Hydrogel wurde Glukoseoxidase eingelagert. Durch Kollaps dieser Hydrogelreservoire wurden Meerrettichperoxidase und Glukoseoxidase in den eingeprägten Mischbereich (rechtes Versuchsfeld) transportiert und dort vermischt. Anschließend wurde eine glukosehaltige Probenlösung auf den eingeprägten Mischbereich aufgebracht. Durch Knicken des Papiersubstrats wurde die auf der linken Seite in einem eingeprägten Bereich angeordnete TMB (3,3',5,5'-Tetramethylbenzidin)-haltige Sensorfläche mit dem eingeprägten Mischbereich in Kontakt gebracht und die Nachweisreaktion initiiert.

Der Test weist einen minimalen Cut-off-Wert von 0,5 mg/ml auf. Daher kann er durch geeignete Auslegung (Menge der Nachweisreagenzien) sowohl auf die untere (0,8 mg/ml) als auch auf die obere Grenze (1,8 mg/ml) der physiologisch normalen Zuckerkonzentration im Blut beim Menschen eingestellt werden.

## Patentansprüche

1. Fluidiksystem, umfassend
- mindestens einen Kanal für den Transport einer Flüssigkeit,
wobei der Kanal aus einem saugfähigen Material (2) gebildet ist, und
- mindestens ein schaltbares Polymergel (1), das als Speicherreservoir und/oder Ventil für die Flüssigkeit fungiert und in Kontakt mit dem saugfähigen Material des Kanals steht.

2. Das Fluidiksystem gemäß Anspruch 1, wobei das saugfähige Material (2) des Kanals ein Cellulose-haltiges Material ist.

3. Das Fluidiksystem gemäß Anspruch 2, wobei das saugfähige Material (2) des Kanals Papier oder Nitrocellulose ist.

4. Das Fluidiksystem gemäß einem der vorstehenden Ansprüche, wobei das schaltbare Polymergel (1) auf der Oberseite des Kanals aufliegt.

5. Das Fluidiksystem gemäß einem der vorstehenden Ansprüche, wobei das schaltbare Polymergel (1) durch Einbetten oder Eingießen fest mit dem saugfähigen Material verbunden ist.

6. Das Fluidiksystem nach einem der vorstehenden Ansprüche, wobei mindestens zwei schaltbare Polymergele (1) mit dem saugfähigen Materials (2) des Kanals in Kontakt stehen; und/oder der Kanal eine oder mehrere Verzweigungen aufweist, wobei es sich bevorzugt um eine oder mehrere T-förmige und/oder X-förmige und/oder Y-förmige Verzweigungen handelt.

7. Das Fluidiksystem gemäß einem der vorstehenden Ansprüche, enthaltend ein Papiersubstrat, das einen oder mehrere saugfähige Bereiche und einen oder mehrere nicht-saugfähige Bereiche aufweist und wobei der Kanal oder die Kanäle durch den oder die saugfähigen Bereiche gebildet sind.

8. Das Fluidiksystem gemäß einem der vorstehenden Ansprüche, weiterhin umfassend ein Heiz- und/oder Kühlelement, welche(s) in thermischem Kontakt mit dem Kanal und/oder dem schaltbaren Polymergel (1) stehen bzw. steht.

9. Das Fluidiksystem gemäß einem der vorstehenden Ansprüche, wobei das schaltbare Polymergel (1) ein schaltbares Hydrogel ist.

10. Das Fluidiksystem gemäß einem der vorstehenden Ansprüche, wobei die in dem schaltbaren Polymergel (1) im gequollenen Zustand vorliegende Flüssigkeit eine darin gelöste oder dispergierte Komponente aufweist, welche aus einem chemischen oder biochemischen Reagenz, einem biologischen Wirkstoff, einem pharmazeutischen Wirkstoff, einem Allergen, einem Antigen, einem Antikörper, einem Enzym, einem Protein und Gemischen von diesen ausgewählt wird.

11. Ein Verfahren zur Freisetzung und zum Transport und gegebenenfalls zum Mischen von Flüssigkeiten, umfassend
- die Bereitstellung des Fluidiksystems nach einem der Ansprüche 1
bis 10, wobei zumindest eines der schaltbaren Polymergele (1) mit einer Flüssigkeit gequollen ist,
- die Änderung eines externen Parameters, so dass zumindest eines der gequollenen Polymergele seine Flüssigkeit freisetzt.

12. Das Verfahren nach Anspruch 11, wobei die Freisetzung der Flüssigkeit durch eine Änderung von Temperatur, pH-Wert, Ionenstärke, Ionenart, elektromagnetischer Strahlung (insbesondere Licht), durch eine chemische
Reaktion, durch die Anwesenheit von chemischen oder biochemischen Reagenzien oder eine Einwirkung durch Biomoleküle, oder durch Kombinationen davon erfolgt.

13. Das Verfahren nach Anspruch 11 oder 12, wobei das Fluidiksystem zwei oder mehr gequollene schaltbare Polymergele (1) aufweist und die Änderung des externen Parameters in Abhängigkeit von der Zeit so erfolgt, dass alle gequollenen Polymergele ihre Flüssigkeit gleichzeitig freisetzen, oder die Änderung des externen Parameters in Abhängigkeit von der Zeit so erfolgt, dass die gequollenen Polymergele ihre Flüssigkeit zeitlich versetzt zueinander abgeben.

14. Das Verfahren nach einem der Ansprüche 11-13, wobei das Fluidiksystem zwei oder mehr gequollene schaltbare Polymergele (1) aufweist und die Flüssigkeiten nach ihrer Freisetzung in das saugfähige Material des Kanals in einem Mischbereich aufeinander treffen und vermischt werden.

15. Das Verfahren nach einem der Ansprüche 11-14, wobei ein chemisches, biologisches oder medizinisches Assay durchgeführt wird, indem die Flüssigkeit des gequollenen Polymergels eine gelöste oder dispergierte Komponente aufweist, welche aus einem chemischen oder biochemischen Reagenz, einem biologischen Wirkstoff, einem pharmazeutischen Wirkstoff, einem Allergen, einem Antigen, einem Antikörper, einem Enzym, einem Protein und Gemischen von diesen ausgewählt wird; eine zu analysierende Probe in das Fluidiksystem eingebracht wird; und die Flüssigkeit nach ihrer Freisetzung in das saugfähige Material des Kanals zu der Probe wandert.

## Claims

1. Fluidic system comprising
- at least one channel for transporting a liquid, wherein the channel is formed from an absorbent material (2), and
- at least one switchable polymer gel (1) which acts as a storage reservoir and/or valve for the liquid and is in contact with the absorbent material of the channel.

2. Fluidic system according to Claim 1, wherein the absorbent material (2) of the channel is a cellulose-containing material.

3. Fluidic system according to Claim 2, wherein the absorbent material (2) of the channel is paper or nitrocellulose.

4. Fluidic system according to one of the preceding claims, wherein the switchable polymer gel (1) lies on the upper side of the channel.

5. Fluidic system according to one of the preceding claims, wherein the switchable polymer gel (1) is connected firmly to the absorbent material by embedding or infusion.

6. Fluidic system according to one of the preceding claims, wherein at least two switchable polymer gels (1) are in contact with the absorbent material (2) of the channel; and/or the channel has one or more branches, wherein they are preferably one or more T-shaped and/or X-shaped and/or Y-shaped branches.

7. Fluidic system according to one of the preceding claims, containing a paper substrate which has one or more absorbent regions and one or more non-absorbent regions and wherein the channel or the channels are formed by the absorbent region or regions.

8. Fluidic system according to one of the preceding claims, further comprising a heating element and/or cooling element which is or are in thermal contact with the channel and/or the switchable polymer gel (1).

9. Fluidic system according to one of the preceding claims, wherein the switchable polymer gel (1) is a switchable hydrogel.

10. Fluidic system according to one of the preceding claims, wherein the liquid present in the swollen state in the switchable polymer gel (1) has a component dissolved or dispersed therein which is selected from a chemical or biochemical reagent, a biological active ingredient, a pharmaceutical active ingredient, an allergen, an antigen, an antibody, an enzyme, a protein and mixtures of these.

11. Method for releasing and for transporting and optionally for mixing liquids comprising
- the provision of the fluidic system according to one of Claims 1 to 10, wherein at least one of the switchable polymer gels (1) is swollen by a liquid,
- changing an external parameter so that at least one of the swollen polymer gels releases its liquid.

12. Method according to Claim 11, wherein the release of the liquid is effected by changing temperature, pH, ionic strength, ionic species, electromagnetic radiation (in particular light), by a chemical reaction, by the presence of chemical or biochemical reagents or an action by biomolecules, or by combinations thereof.

13. Method according to Claim 11 or 12, wherein the fluidic system has two or more swollen switchable polymer gels (1) and changing the external parameter is effected as a function of time so that all swollen polymer gels release their liquid at the same time, or changing the external parameter is effected as a function of time so that the swollen polymer gels release their liquid offset to one another in time.

14. Method according to one of Claims 11-13, wherein the fluidic system has two or more swollen switchable polymer gels (1) and the liquids, after their release into the absorbent material of the channel, meet one another in a mixing region and are mixed.

15. Method according to one of Claims 11-14, wherein a chemical, biological or medical assay is carried out in that the liquid of the swollen polymer gel has a dissolved or dispersed component which is selected from a chemical or biochemical reagent, a biological active ingredient, a pharmaceutical active ingredient, an allergen, an antigen, an antibody, an enzyme, a protein and mixtures of these; a sample to be analysed is introduced into the fluidic system; and the liquid, after its release into the absorbent material of the channel, migrates to the sample.

## Revendications

1. Système fluidique, comprenant
- au moins un canal pour le transport d'un liquide, le canal étant formé à partir d'un matériau absorbant (2) et
- au moins un gel polymère (1) commutable, qui fonctionne comme réservoir d'accumulation et/ou comme soupape pour le liquide et qui est en contact avec le matériau absorbant du canal.

2. Système fluidique selon la revendication 1, le matériau absorbant (2) du canal étant un matériau contenant de la cellulose.

3. Système fluidique selon la revendication 2, le matériau absorbant (2) du canal étant du papier ou de la nitrocellulose.

4. Système fluidique selon l'une quelconque des revendications précédentes, le gel polymère (1) commutable étant situé sur la face supérieure du canal.

5. Système fluidique selon l'une quelconque des revendications précédentes, le gel polymère (1) commutable étant lié solidement au matériau absorbant par incorporation ou noyage dans la masse.

6. Système fluidique selon l'une quelconque des revendications précédentes, au moins deux gels polymères (1) commutables étant en contact avec le matériau absorbant (2) du canal ; et/ou le canal présentant une ou plusieurs ramifications, celles-ci étant de préférence une ou plusieurs ramifications en forme de T et/ou en forme de X et/ou en forme de Y.

7. Système fluidique selon l'une quelconque des revendications précédentes, contenant un substrat en papier, qui présente une ou plusieurs zones absorbantes et une ou plusieurs zones non absorbantes et le ou les canaux étant formés par la ou les zones absorbantes.

8. Système fluidique selon l'une quelconque des revendications précédentes, comprenant en outre un élément chauffant et/ou refroidissant, qui est/sont en contact thermique avec le canal et/ou le gel polymère (1) commutable.

9. Système fluidique selon l'une quelconque des revendications précédentes, le gel polymère (1) commutable étant un hydrogel commutable.

10. Système fluidique selon l'une quelconque des revendications précédentes, le liquide se trouvant dans un état gonflé dans le gel polymère (1) commutable présentant un composant qui y est dissous ou dispersé, qui est choisi parmi un réactif chimique ou biochimique, une substance active biologique, une substance active pharmaceutique, un allergène, un antigène, un anticorps, une enzyme, une protéine ou leurs mélanges.

11. Procédé pour libérer et transporter et le cas échéant mélanger des liquides, consistant à
- préparer le système fluidique selon l'une quelconque des revendications 1 à 10, au moins un des gels polymères (1) commutables étant gonflés par un liquide,
- modifier un paramètre externe de telle sorte qu'au moins un des gels polymères gonflés libère son liquide.

12. Procédé selon la revendication 11, la libération du liquide ayant lieu par une modification de la température, du pH, de la force ionique, du type d'ions, du rayonnement électromagnétique (en particulier la lumière), par une réaction chimique, par la présence de réactifs chimiques ou biochimiques ou par l'effet de biomolécules ou par leurs combinaisons.

13. Procédé selon la revendication 11 ou 12, le système fluidique présentant deux gels polymères (1) commutables gonflés ou plus et la modification du paramètre externe ayant lieu en fonction du temps de manière telle que tous les gels polymères gonflés libèrent leur liquide simultanément ou la modification du paramètre externe ayant lieu en fonction du temps de manière telle que les gels polymères gonflés libèrent leur liquide de manière décalée dans le temps.

14. Procédé selon l'une quelconque des revendications 11-13, le système fluidique présentant deux gels polymères (1) commutables gonflés ou plus et les liquides se rencontrant et étant mélangés dans une zone de mélange après leur libération dans le matériau absorbant (2) du canal.

15. Procédé selon l'une quelconque des revendications 11-14, un test chimique, biologique ou médical étant réalisé en ce que le liquide du gel polymère gonflé présente un composant dissous ou dispersé qui est choisi parmi un réactif chimique ou biochimique, une substance active biologique, une substance active pharmaceutique, un allergène, un antigène, un anticorps, une enzyme, une protéine et leurs mélanges ; un échantillon à analyser est introduit dans le système fluidique ; et le liquide se déplace vers l'échantillon après sa libération dans le matériau absorbant du canal.
